Europäisches Patentamt

European Patent Office

Office européen des brevets

(19)

(11) Publication number: **0 044 187**
A1

## EUROPEAN PATENT APPLICATION

(12)

(21) Application number: **81303084.8**

(22) Date of filing: **07.07.81**

(51) Int. Cl.³: **B 60 Q 11/00**

(30) Priority: **11.07.80 GB 8022820**

(43) Date of publication of application:
**20.01.82 Bulletin 82/3**

(84) Designated Contracting States:
**DE FR GB IT NL SE**

(71) Applicant: **Britax (P.M.G.) Limited**
**Bessingby Industrial Estate, Bridlington**
**North Humberside. YO16 4SJ(GB)**

(72) Inventor: **Canning, Bernard**
**3 Queensway Streetly**
**Sutton Coldfield West Midlands(GB)**

(74) Representative: **Hollinghurst, Antony**
**BRITAX CENTRAL RESEARCH & DEVELOPMENT**
**Kingsbury Road Curdworth**
**Sutton Coldfield West Midlands B76 9EQ(GB)**

(54) **Control circuit for vehicle direction indicators and hazard warning lights.**

(57) A control circuit for the direction indicator and hazard warning lights of a motor vehicle includes a pulsator circuit, comprising a switch 5 controlled by an oscillator 28 and means Q10 for producing an overload signal when the voltage across the switch Q5 exceeds threshold value. The detector means Q10 is arranged to cause termination of operation of the oscillator 28 with the switch Q5 in its non-conductive state. Delay means C5, R44, D6 delays restart of the oscillator for a predetermined time after the overload signal ceases, with the result that for the duration of the condition causing the circuit to supply an excessive current, the switch is alternately on for a short period and off for a longer period. The circuit also includes means for indicating failure of an individual lamp by detecting when the current through a resistor R1 in series with the supply, falls below the threshold value. This is done by repeatedly connecting DC isolating means alternately to each end of the resistor R1 to produce a square wave of amplitude proportional to the voltage thereacross.

./...

Croydon Printing Company Ltd.

FIG 5.

- 1 -

"Control Circuit for Vehicle Direction Indicators
and Hazard Warning Lights"

This invention relates to control circuits for the direction indicators and hazard warning lights of motor vehicles and has particular, but not exclusive, application to the direction indicators and hazard warning lights of articulated commercial vehicles.

In a circuit of the foregoing type, it is necessary to provide a warning light which is visible to the driver of the vehicle and which is illuminated when one or other of the direction indicators is in operation and when all the lamps are working, but which does not illuminate in the event that one of the lamps has failed. The control circuit must also be capable of distinguishing between the transient high current condition, which exists when power is initially applied to the cold filaments of the lamps, and a permanent high current which would exist in the event of a short circuit. The present invention is concerned with the provision of a solid state circuit which meets the foregoing requirements.

According to the invention in one aspect, apparatus for controlling the power supply to the direction indicator lamps of a motor vehicle includes a pulsator circuit comprising a solid state switch.connected in series with a power supply, an oscillator for repeatedly changing the switch means between its conductive state and its non-conductive state, detector means for producing an overload signal when the current through the switch means exceeds a threshold value for longer than a predetermined period of time, oscillator control means for terminating operation of the oscillator with the switch in its non-conductive state in response to the overload signal, and delay means for delaying restart of the oscillator for a predetermined time after the overload signal ceases.

According to the invention in another aspect, apparatus for controlling the power supply to the direction indicator lamps of a motor vehicle includes lamp failure detection means comprising a resistor in series with the supply, solid state switch means for repeatedly connecting DC isolating means to each end of the resistor to produce, at the output of the isolating means, a square wave of amplitude proportional to the voltage across the resistor, and a comparator for comparing the amplitude of the square wave with a reference signal to produce a signal indicating whether the voltage drop across the resistor exceeds a threshold value.

Preferably the DC isolating means comprises a capacitor/ resistor circuit having its time constant adjusted to inhibit production of said control signal during the initial period when the filaments of the lamps are cold.

Embodiments of the invention will now be described, by way of example, with reference to the accompanying drawings, in which:

Figure 1 is a diagram of a circuit for detecting lamp failure in a single direction indicator circuit;

Figure 2 is a diagram of a potential divider for obtaining reference voltages for use in the circuit of Figure 1,

Figure 3 is a diagram of a circuit for controlling the power supply to the circuit shown in Figure 1,

Figure 4 is a diagram of a circuit, based on the circuit of Figure 1, for an articulated commercial vehicle having separate direction indicator sub-circuits for the tractor and the trailer thereof, and

Figure 5 is a diagram of a modified version of the circuit shown in Figure 3.

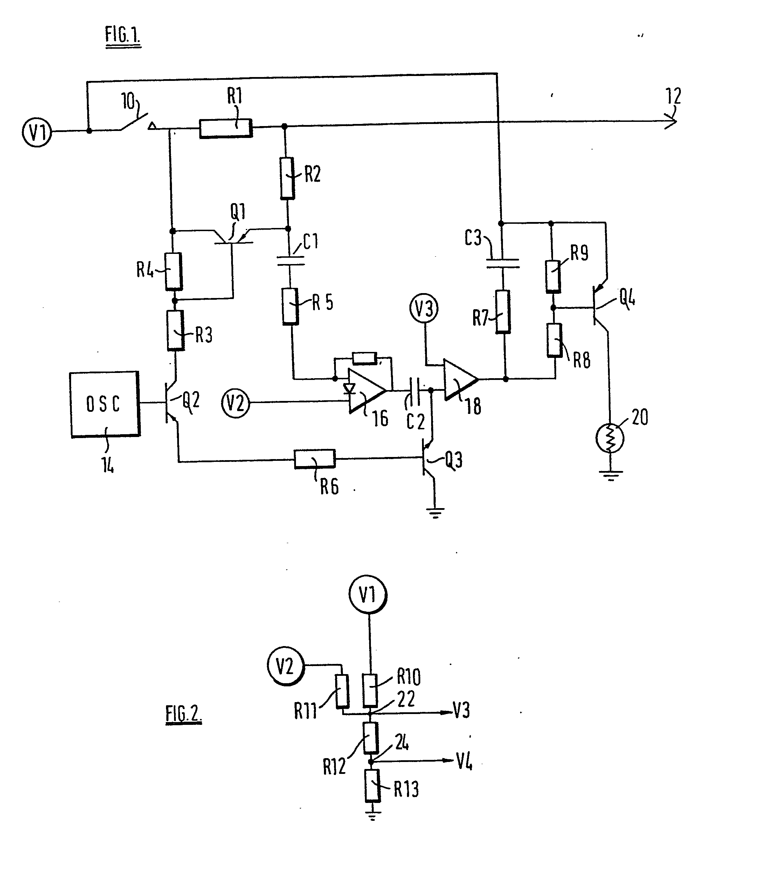

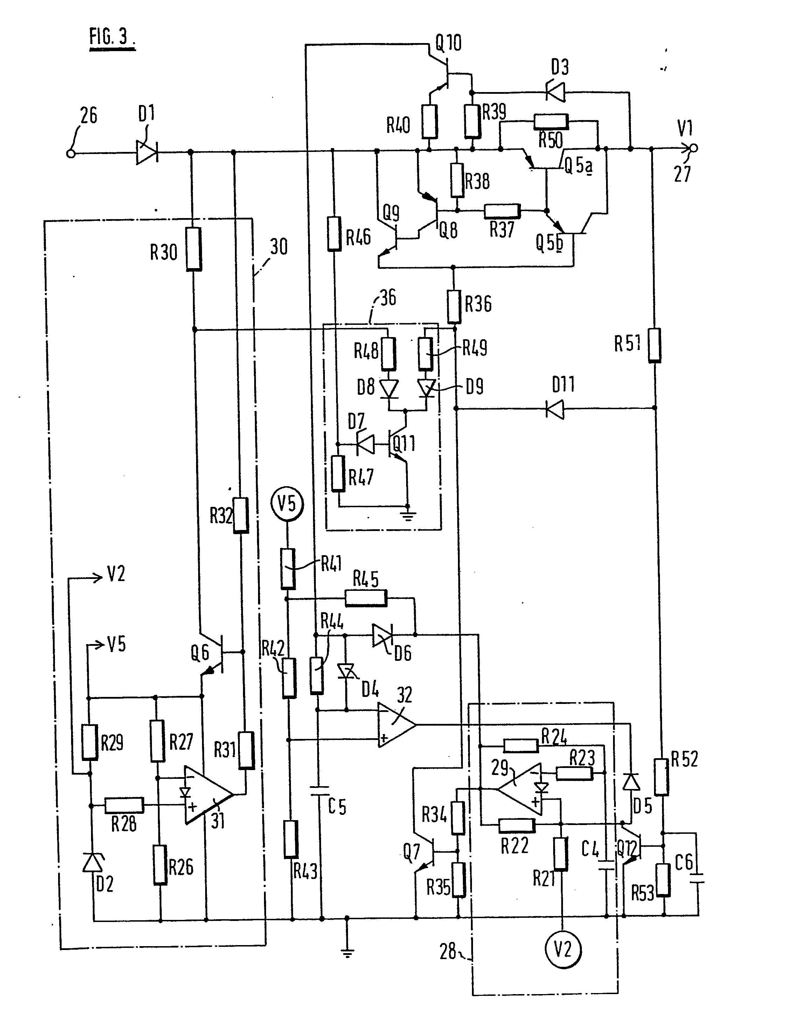

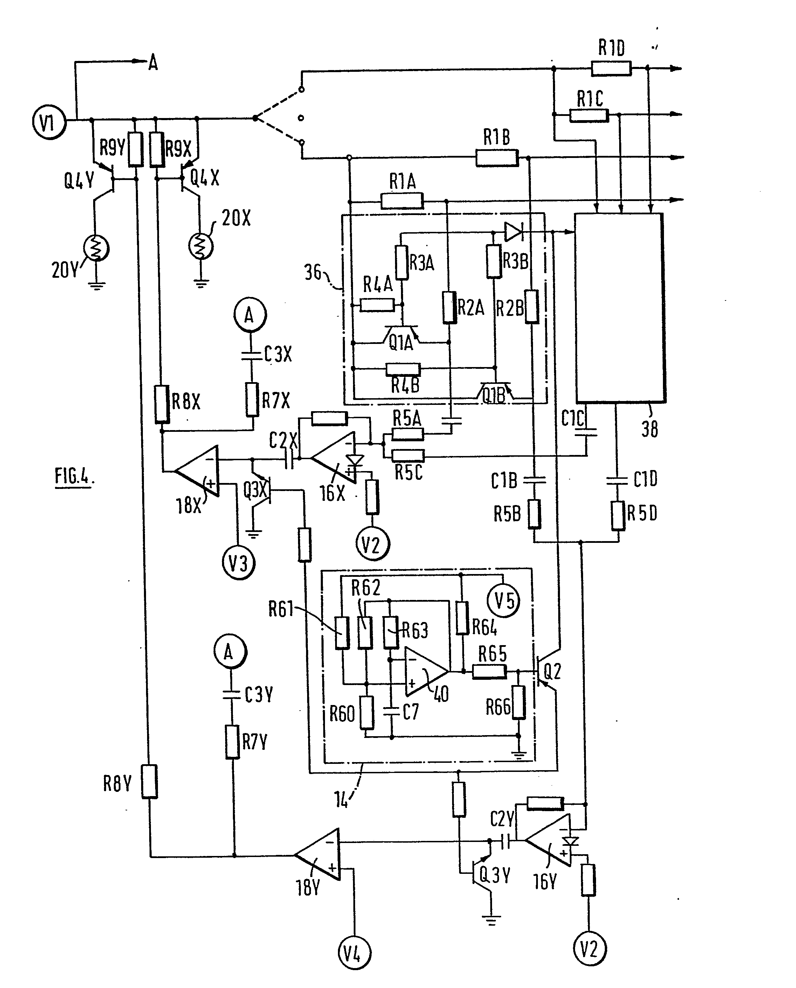

Referring to Figure 1, power from a voltage source VI is connected via a single pole switch 10 and a resistor R1 to an output terminal 12 which, in turn, is connected to one set of direction indicator lamps (not shown), for example the set indicating an intention to turn to the right. In practice, the voltage V1 will be a pulsating voltage, to give the required flashing of the indicator lamps, and the switch 10 will be part of a three-way switch controlling both direction indicators. It will be appreciated that, assuming that

**0044187**

the voltage V1 is constant, the voltage drop across the resistor R1 will be dependent on the number of working lamps connected to the terminal 12.

In order to measure the voltage drop across the resistor R1, a switch in the form of a transistor Q1 has its emitter-collector circuit connected thereacross with a resistor R2 in its emitter circuit. The base of the transistor Q1 is driven by an oscillator 14 via a transistor Q2 and resistor R3, with an emitter-collector resistor R4. The frequency of the oscillator 14 is very much higher than that of the required frequency of flashing of the direction indicator so that the transistor Q1 changes state a substantial number of times during each "on" period of the direction indicator lamps.

When the transistor Q1 is on, the voltage at its emitter is substantially the same as the applied voltage V1 while, when it is off, the voltage at its emitter is reduced by the voltage drop across the resistor R1. The AC component of the resulting square wave is applied via a capacitor C1 and resistor R5 to the input of an AC inverting amplifier 16, the DC output level of which is set by a stabilised reference voltage V2. The output of the amplifier 16 is connected, via a capacitor C2 and a switch in the form of a transistor Q3, to one input of a comparator 18. The other input of the comparator 18 is connected to a variable reference voltage V3, the level of which is arranged to be dependent on the supply voltage V1 so that it is between the amplitude of the above-mentioned square wave when all of the lamps connected to the terminal 12 are working and the amplitude of such square wave when one of these lamps has failed, even if the supply voltage V1 alters.

The transistor switch Q3 is controlled by the oscillator 14 via a resistor R6, so as to be conducting at the same time as the transistor Q1, thereby ensuring that the more negative level of the square wave applied to the comparator 18 is zero.

The output of the comparator 18 is smoothed by an integrator comprising a capacitor C3 and a resistor R7 and applied, via a potential divider comprising resistors R8 and R9, to the base of a transistor Q4 having a warning lamp 20 connected to its collector circuit. Thus the warning lamp 20, which is mounted so as to be visible to the driver of the vehicle, is on when the lamps connected to the terminal 12 are on, provided that all such lamps are working. The delay provided by the time constant of the capacitor C1 and the resistors R2 and R5 ensures that, after failure of one of the direction indicator lamps connected to the terminal 12, the lamp 20 does not flash momentarily if the amplitude of the square wave exceeds the reference voltage V3 during the short period when the filaments of the other lamps are cold.

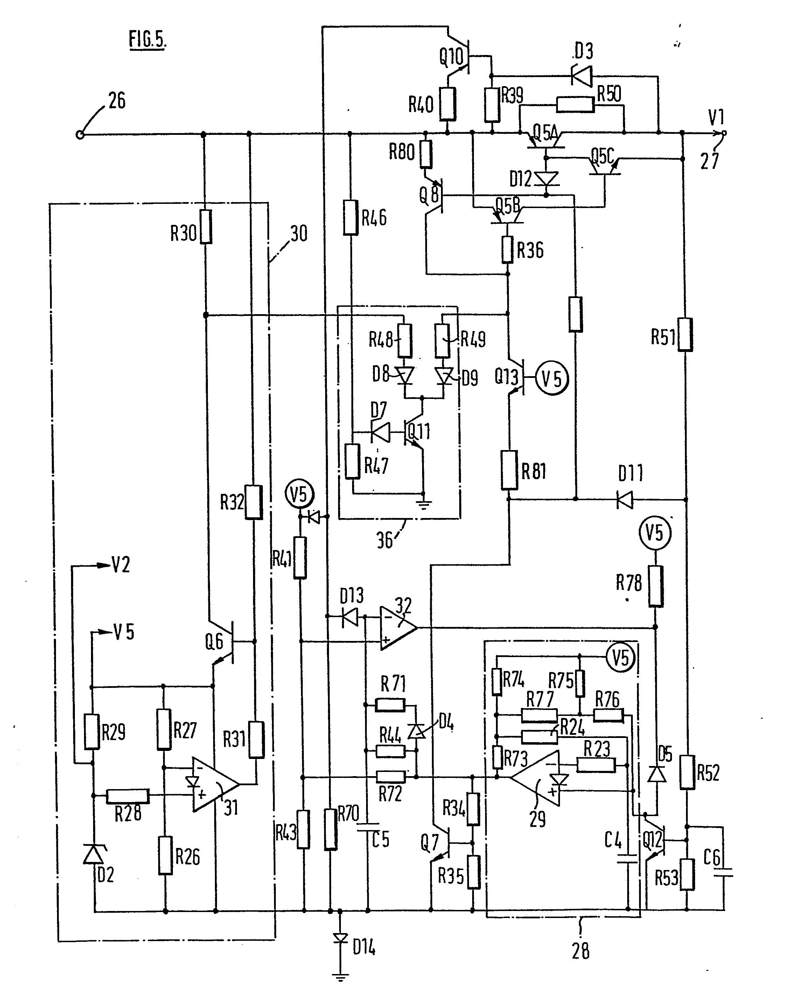

Figure 2 illustrates a circuit for producing the variable reference voltage V3. The input voltage V1 and the stabilised reference voltage V2 are connected via respective resistors R10 and R11 to a terminal 22 on which the reference voltage V3 appears. The terminal 22 is also connected to ground via a potential divider chain comprising resistors R12 and R13. The junction between the resistors R12 and R13 comprises a terminal 24 which produces a second varying reference voltage V4 for use when the number of lamps connected to the terminal 12 is smaller. Obviously, additional tappings may be provided on the potential divider chain so as to produce a greater number of alternative varying reference voltages as required.

The values of the resistors R10 and R11 are chosen as follows. The current $i$ in a filament lamp is related to the applied voltage $v$ as follows

$$i = mv + c$$

where $m$ and $c$ are constants. The value of the resistor R10 is $1/m$ and that of the resistor R11 is $V2/c$. This ensures that the voltage at the terminal 22 follows the slope of the above equation. The values of the resistors R12 and R13 are chosen in accordance with the number of lamps to be supplied from the terminal 12.

Figure 3 shows a circuit for producing the pulsating voltage V1, at terminal 27, and the stabilised reference voltage V2. A terminal 26 is connected to the vehicle battery (not shown). Within the circuit, the terminal 26 is connected via a diode D1 (which guards against inadvertent connection to the vehicle battery with the wrong polarity) to an interrupter switch in the form of a transistor pair Q5a and Q5b. This switch is controlled by an oscillator 28, comprising an amplifier 29, a capacitor C4 and resistors R21 to R24. The circuit of the oscillator 28 is conventional and its operation will therefore not be described in detail. A power supply unit 30, also of conventional design (comprising an amplifier 31, a zener diode D2, a transistor Q6 and resistors R26 to R32), produces the stabilised reference voltage V2 (Figures 1 and 2) and a second stabilized voltage V5, both of which are used by the oscillator 28.

The output of the oscillator 28 is connected, via resistors R34 and R35, a transistor Q7 and a further resistor R36 to the base of the transistor Q5b so that the transistor pair Q5a and Q5b produce the required pulsating voltage V1 for connection to the input of the circuit shown in Figure 1. The voltage across the emitter/base junction of the transistor Q5a, which in proportion to the current therethrough, is sensed, via resistors R37 and R38 by a transistor Q8, the output of which is applied via a further transistor Q9 to the base of the transistor Q5b so as to limit the maximum current which can be supplied. This maximum current must be sufficient to supply the transient level required when the lamps are first switched on and their filaments are cold and is therefore comparable with the current which could be drawn in the event of a short circuit.

In order to interrupt the supply in the event of a short circuit, the voltage drop across the transistor Q5a is also compared with the reference voltage of a Zener diode D3. If the Zener voltage of this diode is exceeded, a transistor Q10 (connected via resistors R39 and R40) is turned on so as to charge up a capacitor C5 via a diode D4. The voltage on the capacitor C5 is applied to one input of a comparator 32, the other input of which is supplied from a potential divider, comprising resistors R41 to R43, connected to the stable reference voltage V5. If the capacitor C4 becomes charges sufficiently for the comparator 32 to change state, the output thereof, which is connected to the oscillator 28 via a diode D5, causes the former to cease operation. The discharge path of the capacitor C5 is via a resistor R44, a diode D6, a resistor R45 and the resistors R40 and R41 mentioned above. Consequently, the discharging time constant is longer then the charging time constant. Thus in the event of an excessive current being passed by the transistor Q5a, the oscillator 28 operates for short periods of time, determined by the charging time constant of the capacitor C5, and ceases operating for longer periods of time, determined by the discharging time constant of the capacitor C5.

The circuit shown in Figure 3 also includes an over-voltage protection device 36 to guard against the possibility of damage due to excess voltage being applied, for example if the vehicle battery becomes disconnected when the alternator is producing a high charging current. The applied voltage is connected via a potential divider comprising resistors R46 and R47, the voltage across the resistor R45 also being applied to a Zener diode D7. If the Zener voltage of this diode D7 is exceeded, transistor Q11 is turned on, grounding the supply connection to the power supply unit 30 via a resistor R48 and a diode D8, and the base of the transistor Q5b via resistor R47 and diode D9.

In order to ensure that the indicator lights come on as soon as they are connected to the voltage V1, a high value resistor R50, in parallel with the switch, is arranged to apply a voltage to the terminal 27 and thence to the base of a transistor Q12 via a potential divider comprising resistors R51, R52 and R53, a capacitor C6 across the resistor R51 preventing transient momentarily turning the transistor Q12 off. The transistor Q12 thus stops the oscillator 28 from operating. When a load is connected to terminal 27, the voltage thereon drops to near zero, so that transistor Q11 turns off and the oscillator is free to run. During subsequent "on" half cycles, the voltage at terminal 27 is diverted via a diode D11 and the transistor Q7 so that the transistor Q12 remains off.

Figure 4 illustrates a circuit for use with the circuit of Figure 3 for sensing the operation of the direction indicators of an articulated vehicle having four separate lamp circuits, namely left and right direction indicator circuits for the tractor and left and right direction indicator circuits for the trailer. The circuit basically comprises four sub-circuits of the type illustrated in Figure 1 with some parts common to more than one sub-circuit. Equivalent components are denoted by the same reference numerals used in Figure 1, with the suffix A for those components which are specific to the "tractor left" circuit, the suffix B for the "trailer left" circuit, the suffix C for the "tractor right" circuit and the suffix D for the "trailer right" circuit. There are separate indicator lamps 20 for the tractor and trailer respectively but each indicator lamp serves for both the left and right circuits. The indicator lamp and associated circuit components for the tractor are denoted by the suffix X while those for the trailer are denoted by the suffix Y.

The components of the switch means for generating the square wave from the resistor in series with the load for the left and right directions each form respective units 36 and 38. The "A" and "B" components for the unit 36 are shown in detail but the unit 38, which is identical, is represented by a block.

The oscillator 14 comprises an amplifier 40, a capacitor C7 and resistors R60 and R66. Since the oscillator 40 is of conventional construction its operation will not be described in detail.

Figure 5 shows a modified version of the circuit illustrated in Figure 3, in which heat disipation and temperature sensitivity are reduced. In Figure 5, equivalent components have been denoted with the same references as were used in Figure 3 and only those parts of the circuit which are different will be subsequently described. The transistor Q9 (Figure 3) is a particular source of temperature sensitivity and accordingly, in Figure 5 it has been omitted. Since the resulting gain is substantially less, the resistors R37 and R38 are not required. Compensation for the temperature sensitivity of the transistor Q8 is provided by a diode D12 connecting its base to that of the transistor Q5A.

A third transistor Q5C is added to the transistor pair Q5A and Q5B forming the interruption switch. The resulting increase in gain reduces the power in the collector circuit of the transistor Q7 and this reduces heat dissipation.

In the circuit illustrated in Figure 3, the capacitor C5 is charged in the event of a short circuit, via the transistor Q10. The resistors R39 and R40 serving to reduce the leakage current when the transistor Q10 is off. However, the leakage current when the transistor Q10 is off can charge the capacitor C5 to such an extent as to cause occasional suppresion of the operation of the oscillator 28, particularly if its "on" periods are much shorter than its "off" periods. In Figure 5, the capacitor C5 is charged via the diode D4 as before, with additional resistors R71 and R72 to limit the charging current, but the voltage source is the output of the amplifier 29, which is derived from the stabilized reference voltage V5 as a source, rather than using the unstabilized voltage available from the transistor Q10. A further diode D13 is connected between the capacitor C5 and the collector of the transistor Q10. Consequently, unless the transistor Q10 is on, the diode D13, and resistor R70 limit charing of the capacitor C5.

In order to prevent the capacitor C4 in the oscillator 28 from completely discharing during "off"half cycles, the feedback paths from the amplifier 29 are connected to an intermediate point in a potential divider chain, formed by the resistors R73 and R74. This changes the bias required on the positive input to the amplifier 29 which is consequently supplied by resistors R75 and R76, the resistor R76, together with a resistor R77, replacing the resistor R22. In addition, in order to maintain the requried bias across the diode D5, the output of the amplifier 32 is connected to the reference voltage V5 by a resistor R78.

To prevent dilution of the feedback current to the transistor A5B, which is provided by resistor R80 and transistor Q13, the direct connection to the collector circuit of the transistor Q7 is replaced by a current source formed by an additional transistor Q13, together with a resistor R81.

Finally, the diode D1 of Figure 3, which give protection against inadvertent connection to the vehicle battery with the wrong polarity, is replaced by a diode D14 between the control circuit and earth. This substantially reduces the amount of heat dissipated, but leaves the transistor Q5A unprotected if connection with incorrect polarity takes place when there is a short circuit in the load connected to the terminal 27.

CLAIMS

1.      Apparatus for controlling the power supply to the direction indicator lamps of a motor vehicle having pulsator circuit comprising a solid state switch (Q5) connected in series with a power supply and an oscillator (28) for rapidly changing the switch means (Q5) between its conductive state and its non-conductive state, characterised by detector means (Q10) for producing an overload signal when the current through the switch means (Q5) exceeds the threshold value for longer than a predetermined period of time, oscillator control means (32) for terminating operation of the oscillator (28) with the switch (Q5) in its non-conductive state in response to the overload signal, and delay means (R44, D6) for delaying restart of the oscillator (28) for a predetermined time after the overload signal ceases.

2.      Apparatus according to claim 1, characterised in that the detector means comprises means (Q10) for comparing a reference voltage (D3) with the voltage drop across a transistor (Q5) in series with the power supply.

3.      Apparatus according to claim 2, characterised in that the reference voltage comprises the threshold voltage of a Zener diode (D3).

4.      Apparatus according to claims 1, 2 or 3, characterised in that the oscillator control means comprises a capacitor (C5) arranged to be charged in response to the detector means (Q10), via a diode (D4), and a comparator (32) arranged to apply a control signal to the oscillator (28) when the voltage on the capacitor (C5) exceeds a predetermined value, the delay means comprising a resistor (R44) in parallel with diode (D4).

5.      Apparatus according to claim 4, characterised in that the overload signal from the detector means (Q10) comprises the charging current to the capacitor (C5) of the oscillator control means.

6.      Apparatus according to claim 4, characterised in that the charging current for the capacitor (C5) of the oscillator control means is derived from a reference voltage source (V5), said charging current being diverted from said capacitor (C5) by a diode (D12), the overload signal from the detector means (Q10) being arranged to reverse-bias said diode (D5).

7.        Apparatus for controlling the power supply to the direction indicator lamps of a motor vehicle, characterised by lamp failure detection means comprising a resistor (R1) in series with a power DC supply (V1), solid state switch means (Q1) for repeatedly connecting DC isolating means C1 to each end of the resistor (R1), to produce at the output of the isolating means (C1) a square wave of amplitude proportional to the voltage across the resistor (R1) and a comparator (18) for comparing the amplitude of the square wave with a reference signal (V3) to produce a signal indicating whether the voltage drop across the resistor (R1) exceeds a threshold value.

8.        Apparatus according to claim 7, characterised in that the DC isolating means comprises  a capacitor/resistor circuit (C1, R2, R5) having its time constant adjusted to inhibit production of said control signal during the initial period when the filaments of the lamps are cold.

9.        Apparatus according to claim 7 or 8, characterised in that the reference signal (V3) for the comparator (18) is arranged to vary with the voltage of the power supply in proportion to the variation therewith of the current in the lamps.

0044187

1 | 4

FIG.1.

FIG.2.

FIG. 3.

FIG.4.

0044187

FIG.5.

**0044187**

Application number

European Patent Office

**EUROPEAN SEARCH REPORT**

EP 81 3C 3084

## DOCUMENTS CONSIDERED TO BE RELEVANT

| Category | Citation of document with indication, where appropriate, of relevant passages | Relevant to claim |
|---|---|---|
| | EP - A - 0 014 537 (NIPPON DENSO CO.)<br><br>* the whole document *<br><br>-- | 1-9 |
| | FR - A - 2 346 184 (SOCIETE DE SIGNALISATIONS AUTOMOBILES SEIMA)<br><br>* the whole document *<br><br>--------- | 1 |

**CLASSIFICATION OF THE APPLICATION (Int. Cl.³)**

B 60 Q 11/00

**TECHNICAL FIELDS SEARCHED (Int. Cl.³)**

B 60 Q 11/00
1/38
H 05 B 39/09

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 5-10-1981 | ONILLON |

EPO Form 1503.1   06.78